# EUROPEAN PATENT APPLICATION

(11) **EP 1 541 314 A1**
(43) Date of publication of application: **15.06.2005**
(21) Application number: 03791370.4
(22) Date of filing: 28.08.2003
(51) Int. Cl.: B29C 39/24

(54) **METHOD AND DEVICE FOR POURING PLASTIC RAW MATERIAL LIQUID**

(30) Priority: 28.08.2002 JP 2002248877; 11.08.2003 JP 2003291172
(71) Applicant: SEIKO EPSON CORPORATION, Shinjuku-ku, Tokyo 163-0811 (JP)
(72) Inventor: KARASAWA, Isao, Suwa-shi, Nagano 392-8502 (JP); TONOUCHI, Kenichi, Suwa-shi, Nagano 392-8502 (JP)
(74) Representative: Melzer, Wolfgang, Dipl.-Ing.
(86) International application number: PCT/JP2003/010924
(87) International publication number: WO 2004/020171

(57) **Abstract**

Liquid sending portions (7a, 7b) of an intermittent fixed displacement pump (6) intermittently sucking and discharging a fixed amount of fluid are parallelly arranged, plastic raw material liquid is discharged from the liquid sending portions (7a, 7b) with the timing of suction and discharge of the liquid sending portions being shifted from each other, plastic raw material liquid discharged from each other, plastic raw material liquid discharged from each of the liquid sending portions (7a, 7b) is joined, and the plastic raw material liquid joined is poured in a casting/polymerizing die (4). Plastic raw material liquid can be stably sent even if its viscosity becomes higher, air bubbles are prevented from being produced in raw material pouring, and an excellent production yield is achieved.

## Description

### Technical field

The present invention relates to a method of and an apparatus for introducing a plastic raw material liquid into a casting polymerization mold for plastic lenses.

### Background art

According to the most general process of introducing a plastic raw material liquid into a casting polymerization mold for casting and polymerizing a plastic product such as a plastic lens or the like, a pressure vessel containing a plastic raw material liquid is pressurized by compressed air to deliver the plastic raw material liquid under pressure, and an inlet valve disposed near an inlet nozzle is opened or closed to start or stop supplying the raw material.

A raw material liquid for plastic lenses is progressively polymerized with time after a catalyst has been added thereto, causing its viscosity to increase. According to the above process of pushing the raw material liquid with compressed air, however, the increased viscosity develops a high pressure loss, tending to gradually lower the discharge rate with time. As a result, the time required to fill the mold with the plastic raw material liquid is prolonged, and the productivity drops.

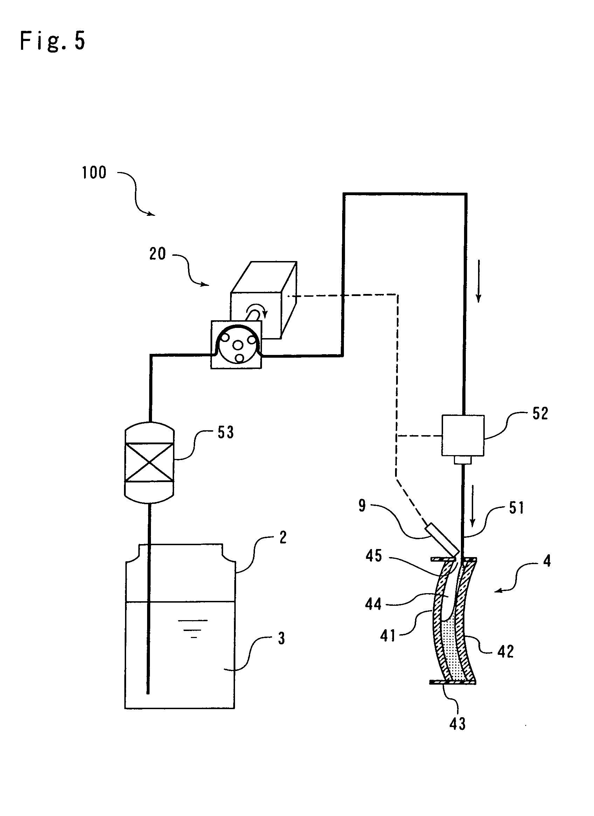

The inventor of the present invention has proposed a raw material supply process which makes it less liable to cause a reduction in the flow rate in the event of a viscosity rise, as disclosed in Japanese patent laid-open No. 2002-18866. FIG. 5 of the accompanying drawings schematically shows the proposed raw material supply process.

An apparatus 100 for introducing a plastic raw material liquid injects a plastic raw material liquid 3 stored in a raw material tank 2 into a casting polymerization mold 4 with a liquid delivery means 20. A mold member 41 for defining an object-side surface of a plastic lens and a mold member 42 for defining an eye-side surface of the plastic lens are positioned such that their lens molding surfaces are spaced from each other in confronting relation. An adhesive tape 43 is then wound in at least one turn fully around outer peripheral surfaces of the mold members 41, 42, thereby making up the casting polymerization mold 4 which has a cavity 44 therein. The plastic raw material liquid 3 is delivered by the liquid delivery means 20 through an inlet valve 52 from a raw material tank 2 into an inlet nozzle 51, from which the plastic raw material liquid 3 is injected into an inlet port 45 of the casting polymerization mold 4. The liquid delivery means 20 may include a roller pump, a pump employing a piezoelectric device, a volume metering pump, or the like. In FIG. 5, a liquid delivery circuit which employs a roller pump as the liquid delivery means 20 is illustrated. The roller pump 20 stops the rotation of its drive shaft in response to a signal from a fill detecting means having a vacuum suction nozzle 9 which detects when the casting polymerization mold 4 is filled with the plastic raw material liquid 3. At the same time, the inlet valve 52 is closed. A filter 53 for trapping fine foreign matter is disposed between the raw material tank 2 and the roller pump 20.

However, the process of introducing the plastic raw material liquid with the liquid delivery means such as a roller pump or the like suffers the following problems: Small air bubbles are produced in the plastic raw material liquid due to pulsations in the discharge pressure which are caused by the liquid delivery means 20. The pulsations in the discharge pressure which are caused by the liquid delivery means 20 are represented by a pulsating waveform with maximum and minimum pressures repeating periodically. Therefore, if the same flow rate for introducing the plastic raw material liquid as when the raw material tank is pressurized by compressed air is to be maintained, then a higher pressure than the plastic raw material liquid is delivered by compressed air is periodically applied. Consequently, the flow rate of the plastic raw material liquid 3 that is discharged from the inlet nozzle 51 under the maximum pressure is greater than the flow rate for introducing the plastic raw material liquid when the plastic raw material liquid is delivered by compressed air. The inlet port 45 of the casting polymerization mold 4 may be small, requiring the inlet nozzle 51 to be slender for introducing the plastic raw material liquid 3. Under the maximum pressure, the plastic raw material liquid 3 is ejected from the inlet nozzle 51 to hit the surfaces of the mold members 41, 42, producing air bubbles upon impact. If the flow rate is high at the time the level of the plastic raw material liquid 3 introduced into the casting polymerization mold 4 rises, then the instant the plastic raw material liquid 3 discharged from the inlet nozzle 51 impinges upon the liquid level in the casting polymerization mold 4, the liquid level is depressed, entrapping ambient air into the liquid thereby to produce air bubbles. If the flow rate is lowered, then no air bubbles are produced. However, the time required to fill the casting polymerization mold 4 is unduly prolonged, resulting in a large reduction in the productivity. Relatively large air bubbles that are produced when the plastic raw material liquid 3 is introduced float up and disappear, and small air bubbles stay where they are produced. If the plastic raw material liquid 3 is cured as it is by heat or ultraviolet radiation, then those small air bubbles remain in the produced plastic lens, thus producing an air bubble defect. Efforts are being made to make thin and lightweight plastic lenses, and use highly expensive materials having high refractive indexes to manufacture plastic lenses. Since the proportion of the material cost in the manufacturing cost of plastic lenses is large, a yield reduction due to the air bubble defect is responsible for an increase in the manufacturing cost.

The present invention has been made in view of the above problems. It is an object of the present invention to provide a method of and an apparatus for introducing a plastic raw material liquid by delivering the plastic raw material liquid stably regardless of an increase in the viscosity thereof and reducing the generation of air bubbles at the time the plastic raw material liquid is introduced, thereby achieving a good production yield.

### Disclosure of Invention

To achieve the above object, there is provided in accordance with the present invention a method of introducing a plastic raw material liquid, including positioning a plurality of liquid delivery units each for intermittently drawing in and discharging a fluid at a constant rate, parallel to each other, discharging flows of the plastic raw material liquid at different times from the liquid delivery units, combining the flows of the plastic raw material liquid discharged from the liquid delivery units, with each other, and introducing the combined plastic raw material liquid into a casting polymerization mold.

Each of the liquid delivery units which intermittently draws in and discharges the fluid at a constant rate is capable of delivering the fluid at the constant rate even if the viscosity of the fluid increases. However, the discharge pressure periodically varies, producing pulsations thereof which tend to develop air bubbles when the plastic row material liquid is discharged from an inlet nozzle and introduced into the casting polymerization mold. When the liquid delivery units disposed parallel to each other discharge the plastic raw material liquid at different times, the pulsations of the discharge pressure are combined out of phase with each other when the discharged flows of the plastic row material liquid are combined with each other, and hence the pulsations interfere with each other and are reduced, thereby averaging the discharge pressure. Therefore, air bubbles produced when the plastic raw material liquid is discharged from the inlet nozzle are reduced, resulting in an increased production yield.

The liquid delivery units may draw in and discharge the plastic raw material liquid by progressively pressing a flexible resilient tube with presser rollers, changing the shape of a diaphragm made of a resilient material to move the diaphragm back and forth, or moving a plunger back and forth in a cylinder to change the volume of the cylinder.

An accumulator for changing the volume of a fluid depending on the pressure of a fluid may be disposed in a flow passage for the combined plastic raw material liquid. The accumulator is effective to absorb pulsations of the discharge pressure of the liquid delivery units which intermittently draw in and discharge the fluid at a constant rate, thereby averaging the discharge pressure.

A filter may be disposed in a flow passage for the combined plastic raw material liquid. When the fluid passes through the filter, the filter causes a pressure loss, providing a resistance in the flow passage of the fluid. The filter disposed in the flow passage is thus effective to absorb pulsations of the discharge pressure, thereby averaging the discharge pressure.

According to the present invention, there is also provided an apparatus for introducing a plastic raw material liquid, characterized by an inlet pipe interconnecting a raw material tank storing a plastic row material liquid and an inlet port of a casting polymerization mold, and an intermittent constant-rate pump disposed in the inlet pipe and having a liquid delivery unit for intermittently drawing in and discharging the fluid at a constant rate, wherein the intermittent constant-rate pump has a plurality of the liquid delivery units disposed parallel to each other and actuatable simultaneously for discharging the plastic row material liquid at different times, respectively, the inlet pipe having a junction interconnecting respective discharge ports of the liquid delivery units.

The intermittent constant-rate pump includes a liquid delivery unit for intermittently drawing in and discharging the fluid at a constant rate, and an actuator for actuating the liquid delivery unit. The liquid delivery unit can draw in and discharge the fluid at the constant rate even if the viscosity of the fluid increases. However, the discharge pressure periodically varies, producing pulsations thereof which tend to develop air bubbles when the plastic row material liquid is discharged from an inlet nozzle and introduced into the casting polymerization mold. When the liquid delivery units disposed parallel to each other discharge the plastic raw material liquid at different times, the pulsations of the discharge pressure are combined out of phase with each other when the discharged flows of the plastic row material liquid are combined with each other, and hence the pulsations interfere with each other and are reduced, thereby averaging the discharge pressure. Therefore, air bubbles produced when the plastic raw material liquid is discharged from the inlet nozzle are reduced.

The intermittent constant-rate pump may include a pump selected from a roller pump, a diaphragm pump, and a plunger pump.

The liquid delivery units should preferably be actuatable by a single drive shaft for causing the liquid delivery units to draw in and discharge the plastic raw material liquid reliably at different times.

Preferably, an accumulator may be disposed in the inlet pipe downstream of a discharge port of the intermittent constant-rate pump, wherein the volume of a fluid in the accumulator is variable depending on the pressure of a fluid. The accumulator is effective to absorb pulsations of the discharge pressure of the liquid delivery units which intermittently draw in and discharge the fluid at a constant rate, thereby averaging the discharge pressure.

Preferably, a filter may be disposed in the inlet pipe downstream of a discharge port of the intermittent constant-rate pump. When the fluid passes through the filter, the filter causes a pressure loss, providing a resistance in the flow passage of the fluid. The filter disposed in the flow passage is thus effective to absorb pulsations of the discharge pressure, thereby averaging the discharge pressure.

Preferably, the casting polymerization mold may include two mold members confronting each other for molding a plastic lens, with a gap between the mold members being sealed, and an inlet nozzle may be mounted on a tip end of the inlet pipe and inserted into the inlet port of the casting polymerization mold.

Some casting polymerization molds which include two mold members for molding a plastic lens have a small gap between the peripheral edges of the mold members. Therefore, the fluid needs to be introduced from the inlet nozzle into the casting polymerization mold. When the fluid is discharged under a high pressure, it tends to produce air bubbles due to pulsations of the discharge pressure. Consequently, the arrangements according to the present invention for averaging the pulsations of the discharge pressure are effective.

### Brief description of Drawings

FIG. 1 is a schematic view showing an embodiment of an apparatus for introducing a plastic raw material liquid according to the present invention;
FIGS. 2(a) through 2(c) show an arrangement of a roller pump of the apparatus for introducing a plastic raw material liquid according to the present invention, FIG. 2(a) is a plan view of the roller pump of the apparatus for introducing a plastic raw material liquid, FIG. 2(b) is a side elevational view of a pump head of the roller pump, and FIG. 2(c) is a graph showing fluctuations of the discharge pressure of a raw material liquid ejected from each pump head;
FIGS. 3(a) and 3(b) are schematic views of a diaphragm pump, FIG. 3(a) showing the diaphragm pump at the time it draws in a raw material liquid, and FIG. 3(b) the diaphragm pump at the time it discharges a raw material liquid;
FIGS. 4(a) and 4(b) are schematic views of a plunger pump, FIG. 4(a) showing the plunger pump at the time it draws in a raw material liquid, and FIG. 4(b) the plunger pump at the time it discharges a raw material liquid; and
FIG. 5 is a schematic view showing a conventional apparatus for introducing a plastic raw material liquid.

### Best Mode for Carrying out the Invention

An embodiment of a method of and an apparatus for introducing a plastic raw material liquid according to the present invention will be described below. However, the present invention is not limited to the embodiment to be described below.

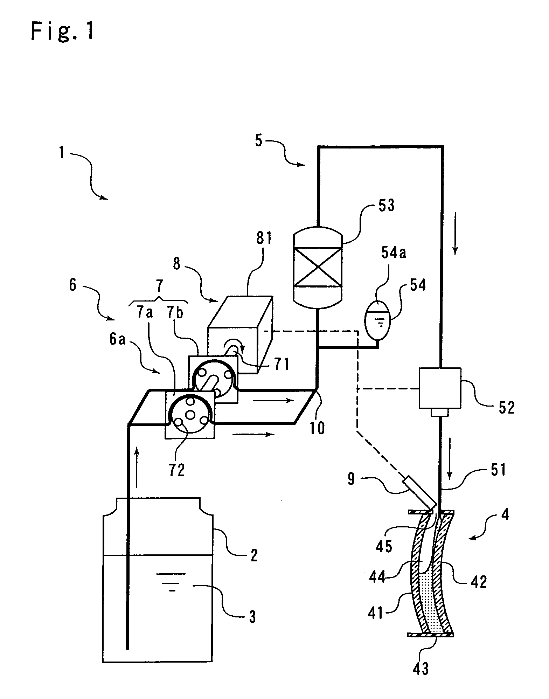

As shown in FIG. 1, an apparatus 1 for introducing a plastic raw material liquid according to the present invention is an apparatus for introducing a plastic raw material liquid 3 including a monomer mixed with a polymerization catalyst stored in a raw material tank 2 by an intermittent constant-rate pump 6 for drawing in and discharging the plastic raw material liquid 3 through an inlet pipe 5 into a cavity 44 in a casting polymerization mold 4 for casting and polymerizing a plastic lens.

The casting polymerization mold 4 has a mold member 41 for defining an object-side surface of a plastic lens and a mold member 42 for defining an eye-side surface of the plastic lens, the mold members 41, 42 being positioned such that their lens molding surfaces are spaced from each other in confronting relation, and an adhesive tape 43 wound in at least one turn fully around outer peripheral surfaces of the mold members 41, 42, thereby sealing the gap between the mold members 41, 42 to form a cavity 44 therebetween. The casting polymerization mold 4 also has an inlet port 45 for introducing the plastic raw material liquid 3 therethrough. The inlet port 45 is formed by peeling off overlapping layers of the adhesive tape 43. Alternatively, the inlet port 45 is formed by forming a hole, in advance, in the adhesive tape 43 at a given position. The gap between the peripheral edges of the mold members 41, 42 of the casting polymerization mold 4 is small when a convex lens is produced, e.g., about 1 mm. Therefore, a slender inlet nozzle 51 is used to introduce the raw material liquid from the inlet port 45 into the cavity 44 of the casting polymerization mold 4.

The inlet pipe 5 of the apparatus 1 for introducing a plastic raw material liquid has a starting end positioned at the inner bottom of the raw material tank 2. The intermittent constant-rate pump 6 is connected to the inlet pipe 5 for drawing in the raw material liquid 3 from the raw material tank 2 and discharging the raw material liquid 3 from the inlet nozzle 51, which is connected to a terminal end of the inlet pipe 5, into the cavity 44 of the casting polymerization mold 4. The inlet pipe 5 has an inlet valve 52 connected directly to the inlet nozzle 51 for starting and stopping delivering the raw material liquid 3 to the inlet nozzle 51. A filter 53 and an accumulator 54 are disposed in a flow passage between the intermittent constant-rate pump 6 and the inlet valve 52.

The intermittent constant-rate pump 6 includes a liquid delivery unit 7 for drawing in and discharging a fluid intermittently at a constant rate, and an actuator 8 for actuating the liquid delivery unit 7. According to the present embodiment, the intermittent constant-rate pump 6 includes a roller pump. The roller pump, which is also referred to as a tubing pump, has a flexible resilient tube which is progressively pressed by presser rollers to draw in and discharge a fluid. Since the raw material liquid flows through the tube and is kept out of direct contact with the actuator in the roller pump, the roller pump does not allow impurities to be mixed with the raw material liquid, and prevents the raw material liquid from eroding the actuator.

With the apparatus 1 for introducing a plastic raw material liquid according to the present embodiment, a roller pump 6a is of a structure having two liquid delivery units fixed to single drive shaft and coaxially actuatable by a single actuator. The actuator 8 includes a single drive motor 81 and a liquid delivery unit 7 having a first pump head 7a and a second pump head 7b which are juxtaposed and actuatable by a drive shaft 71 of the drive motor 81. Each of the pump heads 7a, 7b has three presser rollers 72, for example, rotatably mounted at equal angular spaced intervals on a peripheral edge of a rotary plate which is coupled to the drive shaft 71 of the drive motor 81. A flexible resilient tube 73 that is disposed along the peripheral edge of a stroke of the presser rollers 72 is progressively pressed by the presser rollers 72 upon rotation of the rotary plate that is actuated by the drive motor 81. The drive motor 81 includes a motor whose rotational speed can be controlled for controlling the flow rate at which the plastic raw material liquid 3 is introduced. The rotational speed of the drive motor 81 is controlled by inverter frequency control or servomotor control or stepping-motor control.

On the suction side of the roller pump 6a, the inlet pipe 5 is branched into two pipes connected respectively to the suction ports of the first pump head 7a and the second pump head 7b for supplying the raw material liquid to the first pump head 7a and the second pump head 7b. On the discharge side of the roller pump 6a, the branched pipes are joined to each other by a junction 10 where the raw material liquids discharged from the first pump head 7a and the second pump head 7b are combined with each other.

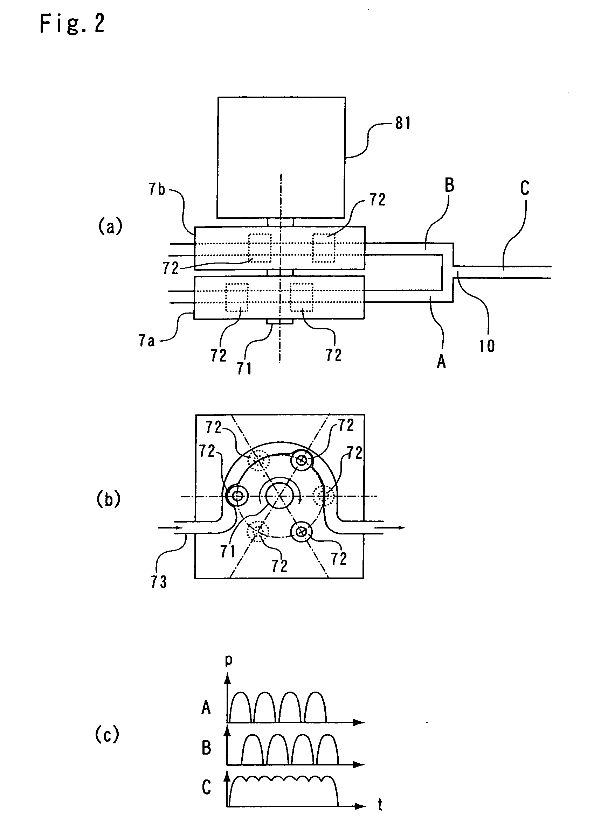

As shown in FIG. 2(a), the first pump head 7a and the second pump head 7b are mounted on the drive shaft 71 with their presser rollers 72 positionally staggered relatively to each other. As shown in FIG. 2(b), each of the first pump head 7a and the second pump head 7b has three presser rollers 72 mounted at respective positions that are radially spaced from the center of rotation and angularly spaced at equal angles of 120°. The presser rollers 72 of the second pump head 7b which are indicated by the broken lines are fixed to the drive shaft 71 at positions that are angularly spaced 60° from the presser rollers 72 of the first pump head 7a. Therefore, as shown in FIG. 2(b), each of the presser rollers 72 of the second pump head 7b which are indicated by the broken lines is located intermediate between two of the presser rollers 72 of the first pump head 7a.

At each of a discharge outlet A of the first pump head 7a and a discharge outlet B of the second pump head 7b as shown in FIG. 2(a), the discharge pressure p has a pulsating waveform where the discharge pressure periodically varies from zero to a certain discharge pressure level with time t as shown in FIG. 2(c). The pulsating waveforms of the discharge pressures at the discharge outlets A, B are one-half out of phase with each other, so that at the time one discharge pressure level is minimum, the other discharge pressure level is maximum. Therefore, at a position C where the outlets A, B are combined with each other, as shown at C in FIG. 2(c), the combined pulsating waveforms interfere with each other, reducing the difference between maximum and minimum pressures. That is, the discharge pressure is averaged, reducing pulsations.

As a result, when the plastic raw material liquid 3 is discharged at different times from the juxtaposed liquid delivery units 7a, 7b, and the flows of the plastic raw material liquid 3 that are discharged from the juxtaposed liquid delivery units 7a, 7b are combined and introduced from the inlet nozzle 51 into the casting polymerization mold 4, the flow rate of the plastic raw material liquid 3 discharged from the inlet nozzle 51 is averaged to prevent air bubbles from being trapped into the plastic raw material liquid 3. Therefore, the generation of an air bubble defect is reduced to increase production yield.

Since the first pump head 7a and the second pump head 7b are disposed parallel to each other, the rotational speed of the drive shaft 71 of the drive motor 81 may be set to a value lower than the conventional rotational speed for achieving a predetermined flow rate. Tubes 73 that are used in the roller pump 6a are subject to repeated compressive deformation and hence are susceptible to rupture when used over a long period of time. Because the rotational speed of the drive shaft 71 of the roller pump 6a can be set to a lower value, a repeated load imposed on the tubes 73 is reduced, allowing the tubes 73 to be used for an extended period of time. Therefore, the danger of damage to the tubes 73 and hence a leakage of the raw material liquid can be avoided even when used over a long period of time.

The first pump head 7a and the second pump head 7b, which are juxtaposed, of the liquid delivery unit 7 are fixedly mounted on the single drive shaft 71, and are simultaneously driven by the single drive shaft 71 to keep the presser rollers 72 in their relative positions. Therefore, the timing to draw in and discharge the plastic raw material liquid 3 is not varied with time, but the discharge of the plastic row material liquid 3 is stably averaged.

The accumulator 54 contains a fluid whose volume is variable depending on the pressure of a fluid. The accumulator 54 has an air chamber 54a defined in a tank and providing an interface with the liquid communicating with the inlet pipe 5. The air chamber 54a of the accumulator 54 serves as a damper, and is shrunk when under a high pressure and expanded when under a low pressure. The accumulator 54 is connected to the inlet pipe 5 between the intermittent constant-rate pump 6 and the inlet nozzle 51 for absorbing pulsations to average the discharge pressure. As the air chamber 54a is larger, the pulsation reducing ability is greater. For controlling the flow rate of the plastic row material liquid 3 to be introduced, the volume of the air chamber 54a needs to be managed in a range from 0.1 ml to 10 ml, or preferably from 0.5 ml to 3.0 ml. If the air chamber 54a is too large, then the response is reduced when the flow rate is changed. If the flow rate is to be changed instantaneously, then the air chamber 54a is required to be reduced in size. The air chamber 54a may be forcibly formed in the vent of a capsule filter or a cartridge filter of the filter 53. For managing the air chamber in the filter 53, it is important to direct the plastic raw material liquid 3 to flow upwardly in order to allow air to be released easily from the filter 53. The accumulator 54 itself may be made of a resilient material and may be free of an air chamber to achieve the same advantages.

The filter 53 serves to trap fine foreign matter in the raw material liquid. When the raw material liquid 3 passes through the filter 53, the filter 53 causes a pressure loss and increases the resistance of the flow passage to the flow of the raw material liquid 3. The filter 53 that is connected in series to the inlet pipe 5 between the intermittent constant-rate pump 6 and the inlet nozzle 51 is effective to absorb pulsations and average the discharge pressure. Since a disk filter having a small filter area is not effective enough to lower pulsations of the discharge pressure, a capsule filter or a cartridge filter having a large filter area is preferable for use as the filter 53.

The apparatus 1 for introducing a plastic raw material liquid according to the present embodiment has a fill detecting means for detecting the plastic raw material liquid 3 that overflows the inlet port 45 when the cavity 44 is filled with the plastic raw material liquid 3. The fill detecting means includes a vacuum suction nozzle 9 having a tip end disposed near the inlet port 45 of the casting polymerization mold 4. The vacuum suction nozzle 9 draws in the plastic raw material liquid 3 that overflows the inlet port 45 and a sensor disposed in a vacuum suction circuit detects the plastic raw material liquid 3 drawn by the vacuum suction nozzle 9, whereupon the fill detecting means detects when the cavity 44 is filled with the plastic raw material liquid 3. In response to a signal from the fill detecting means, a control system (not shown) deenergizes the drive motor 81 of the roller pump 6a and simultaneously closes the inlet valve 52. When the drive shaft 71 of the roller pump 6a is stopped against rotation, the supply of the plastic raw material liquid 3 is stopped. The inlet valve 52 is used to prevent the plastic raw material liquid 3 from dripping from the inlet nozzle 51.

The non-illustrated control system controls the rotational speed of the roller pump drive motor 81 to control the flow rate of the plastic raw material liquid 3 to be introduced. Because the casting polymerization mold 4 is available in many types having greatly different volumes, it is preferable to control the flow rate of the plastic raw material liquid 3 to be introduced depending on the volume of the casting polymerization mold 4 in order to complete the process of filling the casting polymerization mold 4 with the plastic raw material liquid 3 within a predetermined period of time. If the flow rate is high the instant the casting polymerization mold 4 is filled with the plastic raw material liquid 3, then the plastic raw material liquid 3 tends to spill over, it is preferable to employ such an introducing pattern that the flow rate is reduced immediately before the casting polymerization mold 4 is filled. It is also preferable to perform a control process for slowly increasing the rotational speed of the drive motor 81 to lessen the momentum of the plastic raw material liquid 3 at the time it impinges upon the mold in an initial introducing stage.

Operation of the apparatus 1 for introducing a plastic raw material liquid shown in FIG. 1 will be described below. The inlet nozzle 51 is installed on the tip end of the inlet valve 52, and the tip end of the inlet nozzle 51 is inserted into the inlet port 45 which is formed in advance in the adhesive tape 43 of the casting polymerization mold 4. The roller pump 6a is actuated to introduce the plastic material liquid 3 in advance prepared in the raw material tank 2 from the inlet nozzle 51 through the inlet port 45 into the cavity 44 of the casting polymerization mold 4 while the rotational speed of the drive motor 81 of the roller pump 6a is being controlled according to a programmed pattern or depending on a signal from a liquid level sensor disposed in the casting polymerization mold 4. When the casting polymerization mold 4 is filled with the plastic material liquid 3 supplied, the plastic material liquid 3 overflows the inlet port 45 and is drawn by the vacuum suction nozzle 9. The plastic material liquid 3 that has overflowed the inlet port 45 is detected by the sensor disposed in the vacuum suction circuit. In response to a signal from the sensor, the roller pump 6a is stopped and the inlet valve 52 is closed simultaneously.

In FIGS. 1 and 2, the roller pump 6a is employed which has single drive shaft 71 driven by the single drive motor 81 for coaxially actuating two pump heads 7a, 7b of the liquid delivery unit 7. If the number of pump heads is increased and their operation is brought slightly out of phase with each other, then they are effective to reduce pulsations of the discharge pressure. However, since they make the inlet pipe 5 complex, make it difficult to clean the inlet pipe 5, and increase the cost of the apparatus, the number of pump heads should preferably be 2 or 3. The number of presser rollers 72 and the angular intervals therebetween are not limited. A plurality of roller pumps each having a single liquid delivery unit actuatable by a single actuator may be provided and the liquid delivery assemblies may be operated to draw and discharge the raw material liquid at different times. From the standpoint of the ease of control and an energy saving ability, however, it is preferable to use a roller pump having a plurality of pump heads actuatable by a single drive motor. The maximum flow rate at which the raw material liquid is introduced into the casting polymerization mold is already determined, and simply installing a plurality of pump heads results in an increase in the flow rate at which the raw material liquid is discharged therefrom. Accordingly, the desired flow rate is achieved by reducing the rotational speed of the drive shaft.

The apparatus for introducing a plastic raw material liquid according to the above embodiment employs the roller pump as the intermittent constant-rate pump 6. However, instead of the roller pump, a diaphragm pump or a plunger pump may be used as the intermittent constant-rate pump.

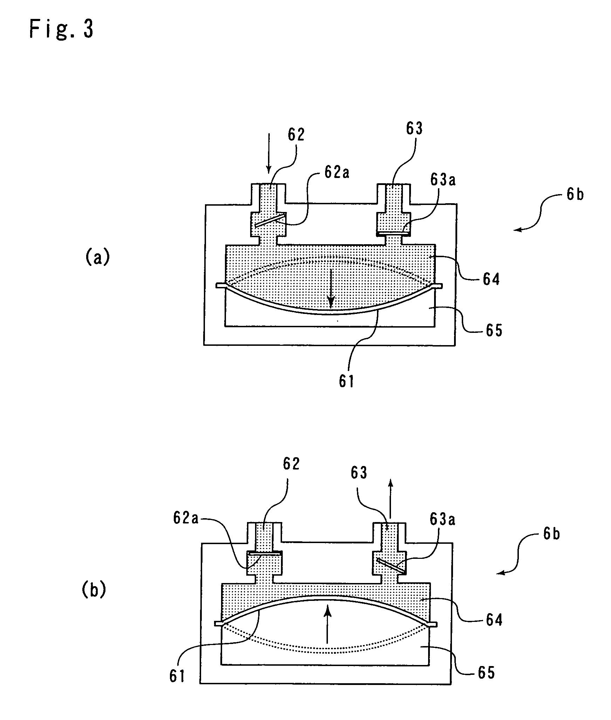

FIGS. 3(a) and 3(b) schematically show a structure of a diaphragm pump. The diaphragm pump has a liquid delivery unit including a thin film (diaphragm) made of a resilient material which changes its shape to move back and forth for drawing and discharging the raw material liquid. The diaphragm may be actuated under a hydraulic or pneumatic pressure, mechanically back and forth by a plunger, or by a piezoelectric element. The diaphragm pump shown in FIGS. 3(a) and 3(b) is actuated by piezoelectric elements.

The diaphragm pump 6b which is actuated by piezoelectric elements uses a diaphragm 61 incorporating two piezoelectric elements. When a voltage is applied to the diaphragm 61, one of the piezoelectric elements is elongated and the other piezoelectric element is contracted. The diaphragm 61 is disposed in a space within a pressure vessel which has a suction port 62 and a discharge port 63, dividing the space into a first space 64 connected to the suction port 62 and the discharge port 63 and a second space 65 separate from the first space 64. The suction port 62 has a check valve 62a which is opened under a negative pressure in the pressure vessel, and the discharge port 63 has a check valve 63a which is opened under a pressure buildup in the pressure vessel.

When an AC voltage is applied to the diaphragm 61, the diaphragm 61 vibrates in the periodic cycles of the AC voltage. The amount of the raw material liquid to be introduced is controlled by changing the voltage to control the amplitude of the diaphragm 61 or changing the frequency to control the frequency of vibrations of the diaphragm 61.

As shown in FIG. 3(a), when the diaphragm 61 is deformed into the second space 65, a negative pressure is developed in the first space 64, opening the check valve 62a in the inlet port 62 and closing the check valve 63a in the discharge port 63, thereby causing the fluid to flow from the inlet port 62 into the first space 64. Then, as shown in FIG. 3(b), when the diaphragm 61 is deformed into the first space 64, a pressure buildup is developed in the first space 64, closing the check valve 62a in the inlet port 62 and opening the check valve 63a in the discharge port 63, thereby discharging the fluid in the first space 64 from the discharge port 63. Since the diaphragm pump 6b draws in and discharges the fluid on the vibration of the diaphragm 61, the discharge pressure has pulsations.

Pulsations caused by the diaphragm pump 6b in the discharge pressure of the plastic raw material liquid can be reduced by connecting a plurality of diaphragm pumps 6b parallel to each other and vibrating the diaphragms 61 thereof at different times to cause fluid flows discharged from the diaphragm pumps 6b to interfere with each other when they are combined. If the diaphragms are moved mechanically back and forth, then the diaphragms can be actuated by a single drive shaft. The diaphragm pumps 6b which employ piezoelectric elements may have their diaphragms 61 vibrated at different times by applying control voltages from a piezoelectric controller out of phase with each other.

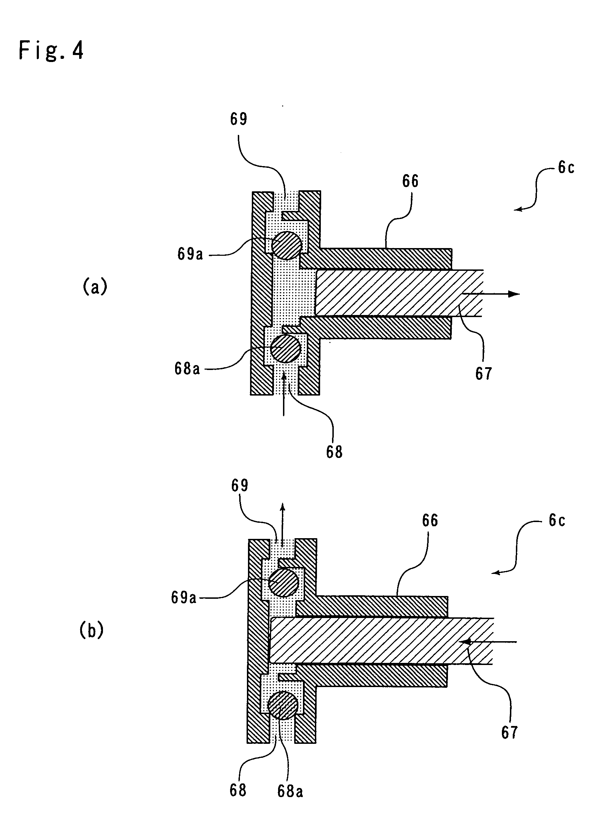

FIGS. 4(a) and 4(b) schematically show a plunger pump. The plunger pump is a pump for moving back and forth a plunger in the shape of a round rod within a cylinder to change the volume of the cylinder to draw in and discharge the fluid. The plunger pump 6c has a plunger 67 movable back and forth in a cylinder 66. A suction port 68 and a discharge port 69 are connected to the cylinder 66. The suction port 68 has a check valve 68a which is opened under a negative pressure in the cylinder 66, and the discharge port 69 has a check valve 69a which is opened under a pressure buildup in the cylinder 66.

As shown in FIG. 4(a), when the plunger 67 is pulled, a negative pressure is developed in the cylinder 66, opening the check valve 68a in the inlet port 68 and closing the check valve 69a in the discharge port 69, thereby causing the fluid to be drawn in from the inlet port 68. Then, as shown in FIG. 4(b), when the plunger 67 is pushed, the fluid in the cylinder 66 is forced out. At this time, the check valve 68a in the inlet port 68 is closed, and the check valve 69a in the discharge port 69 is opened. In response to a signal from a plunger controller, the plunger 67 is repeatedly pulled and pushed. Therefore the discharge pressure of the fluid has pulsations.

Pulsations caused by the plunger pump can be reduced by connecting a plurality of plunger pump liquid delivery units parallel to each other and operating the plungers 67 at different times to cause fluid flows discharged from the liquid delivery units to interfere with each other when they are combined. The plungers may be actuated to move back and forth by a single drive shaft. The amount of the raw material liquid to be introduced by the plunger pump is controlled by changing the moving stroke of the plunger or changing the operating periodic cycles of the plunger with a plunger controller.

The present invention is not limited to the above embodiments. In the above description, the casting polymerization mold is used to mold a plastic lens. However, the present invention is applicable to not only casting polymerization molds for molding plastic lenses, but also any casting polymerization molds. Three pumps, i.e., the roller pump, the diaphragm pump, and the plunger pump, are described as the intermittent constant-rate pump. However, other constant-rate pumps which produce pressure pulsations can also be used. An intermittent constant-rate pump having a plurality of liquid delivery units actuatable by a single actuator and an intermittent constant-rate pump having a single liquid delivery unit actuatable by a single actuator may be combined with each other, or intermittent constant-rate pumps of different types may be combined with each other, insofar as the liquid delivery units connected parallel to each other can draw in and discharge the fluid at different times.

### (Example)

An inventive example according to the present invention will be described below. A roller pump having a pump head with three presser rolls angularly spaced at equal angles of 120° was used as an intermittent constant-rate pump. A single pump head and two pump heads were compared with each other. With the two pump heads, the presser rollers thereof were fixedly mounted on the drive shaft such that each presser roller of one pump head was positioned between two adjacent presser rollers of the other pump head. A capsule filter was disposed in a pipe downstream of the roller pump. An accumulator had an air chamber of 1 ml in the vent of the capsule filter. A combination of the above three pulsation reducing means and the generation of air bubbles at the time the plastic raw material liquid is introduced into the casting polymerization mold are shown in Table 1. Air bubble generation percentages represent whether air bubbles are present or not when the plastic raw material liquid is introduced, but not the values of air bubble defects after the plastic raw material liquid is cured by heat or ultraviolet rays.

**Table 1**

| Pump head | One | | | | Two | | | |
|---|---|---|---|---|---|---|---|---|
| Filter | None | | Yes | | None | | Yes | |
| Accumulator | None | Yes | None | Yes | None | Yes | None | Yes |
| Air bubble generation percentage (%) | 70 | 12 | 16 | 5 | 3.2 | 0.2 | 0.8 | 0.0 |

As can be seen from Table 1, air bubbles were generated at 70% under conditions of one pump head, no filter, and no accumulator (conventional introducing method), and the air bubble generation percentage was 0% when the three pulsation reducing means were combined. It was proven that the inventive introducing method was highly effective to reduce pulsations and suppress the generation of air bubbles upon introduction of the plastic raw material liquid. Respective operation of pulsation reducing means are also effective.

### Industrial applicability

The method of and the apparatus for introducing a plastic raw material liquid according to the present invention can be used in applications for introducing the plastic raw material liquid into a cast polymerization mold in a casting and polymerizing step of a process of producing a plastic eyeglass lens, for example.

## Claims

1. A method of introducing a plastic raw material liquid,
**characterized by**:
positioning a plurality of liquid delivery units each for intermittently drawing in and discharging a fluid at a constant rate, parallel to each other, discharging flows of the plastic raw material liquid at different times from said liquid delivery units, combining the flows of the plastic raw material liquid discharged from said liquid delivery units, with each other, and introducing the combined plastic raw material liquid into a casting polymerization mold.

2. A method of introducing a plastic raw material liquid according to claim 1, **characterized in that**:
said liquid delivery units draw in and discharge the plastic raw material liquid by progressively pressing a flexible resilient tube with presser rollers, changing the shape of a diaphragm made of a resilient material to move the diaphragm back and forth, or moving a plunger back and forth in a cylinder to change the volume of the cylinder.

3. A method of introducing a plastic raw material liquid according to claim 1, **characterized in that**:
an accumulator for changing the volume of a fluid depending on the pressure of a fluid is disposed in a flow passage for the combined plastic raw material liquid.

4. A method of introducing a plastic raw material liquid according to claim 1, **characterized in that**:
a filter is disposed in a flow passage for the combined plastic raw material liquid.

5. An apparatus for introducing a plastic raw material liquid,
**characterized by**
an inlet pipe interconnecting a raw material tank storing a plastic row material liquid and an inlet port of a casting polymerization mold, and an intermittent constant-rate pump disposed in said inlet pipe and having a liquid delivery unit for intermittently drawing in and discharging the fluid at a constant rate,
wherein said intermittent constant-rate pump has a plurality of said liquid delivery units disposed parallel to each other and actuatable simultaneously for discharging the plastic row material liquid at different times, respectively, and
said inlet pipe having a junction interconnecting respective discharge ports of said liquid delivery units.

6. An apparatus for introducing a plastic raw material liquid according to claim 5, **characterized in that**:
said intermittent constant-rate pump comprises a pump selected from a roller pump, a diaphragm pump, and a plunger pump.

7. An apparatus for introducing a plastic raw material liquid according to claim 5, **characterized in that**:
said liquid delivery units are actuatable by a single drive shaft.

8. An apparatus for introducing a plastic raw material liquid according to claim 5, **characterized by**:
an accumulator disposed in the inlet pipe downstream of a discharge port of said intermittent constant-rate pump, wherein a volume of the fluid in the accumulator is variable depending on the pressure of a fluid.

9. An apparatus for introducing a plastic raw material liquid according to claim 5, **characterized by**:
a filter disposed in the inlet pipe downstream of a discharge port of said intermittent constant-rate pump.

10. An apparatus for introducing a plastic raw material liquid according to claim 5, **characterized in that**:
said casting polymerization mold comprises two mold members confronting each other for molding a plastic lens, with a gap between the mold members being sealed, and
an inlet nozzle is mounted on a tip end of said inlet pipe and inserted into the inlet port of the casting polymerization mold.
